# EUROPÄISCHE PATENTANMELDUNG

(11) **EP 1 248 023 A1**
(43) Veröffentlichungstag der Anmeldung: **09.10.2002**
(21) Anmeldenummer: 01108478.7
(22) Anmeldetag: 04.04.2001
(51) Int. Cl.: F16J 15/08, F16J 15/02

(54) **Dichtungssystem, insbesondere zur Verwendung in einer Gasturbine, und Gasturbine**

(71) Anmelder: SIEMENS AKTIENGESELLSCHAFT, 80333 München (DE)
(72) Erfinder: Tiemann, Peter, 58452 Witten (DE)

(57) **Zusammenfassung**

Ein Dichtungssystem (1) soll besonders zur Verwendung in einer Gasturbine (50) geeignet sein und dabei mit besonders geringem Herstellungsaufwand eine lösbare Anbringung von Komponenten bei besonders guter Abdichtung getrennt zu haltender Strömungskanäle ermöglichen. Dazu umfaßt das Dichtungssystem (1) erfindungsgemäß ein erstes Dichtelement (2), das einen angeformten Dichtkeil (6) aufweist, und ein zweites Dichtelement (4), bei dem an einem Trägerkörper (8) ein Paar von näherungsweise parallel geführten Dichtlippen (10, 12) unter Spaltbildung angeformt sind, wobei der Dichtkeil (6) mit dem von den Dichtlippen (10, 12) gebildeten Spalt (14) in Eingriff bringbar ist.

## Beschreibung

Dichtungssystem, insbesondere zur Verwendung in einer Gasturbine, und Gasturbine

Die Erfindung betrifft ein Dichtungssystem, insbesondere zur Verwendung in einer Gasturbine. Sie bezieht sich weiterhin auf eine Gasturbine mit einem derartigen Dichtungssystem.

Gasturbinen werden in vielen Bereichen zum Antrieb von Generatoren oder von Arbeitsmaschinen eingesetzt. Dabei wird der Energieinhalt eines Brennstoffs zur Erzeugung einer Rotationsbewegung einer Turbinenwelle benutzt. Der Brennstoff wird dazu in einer Brennkammer verbrannt, wobei von einem Luftverdichter verdichtete Luft zugeführt wird. Das in der Brennkammer durch die Verbrennung des Brennstoffs erzeugte, unter hohem Druck und unter hoher Temperatur stehende Arbeitsmedium wird dabei über eine der Brennkammer nachgeschaltete Turbineneinheit geführt, wo es sich arbeitsleistend entspannt.

Bei der Auslegung derartiger Gasturbinen ist zusätzlich zur erreichbaren Leistung üblicherweise ein besonders hoher Wirkungsgrad ein Auslegungsziel. Eine Erhöhung des Wirkungsgrades läßt sich dabei aus thermodynamischen Gründen grundsätzlich durch eine Erhöhung der Austrittstemperatur erreichen, mit dem das Arbeitsmedium aus der Brennkammer ab- und in die Turbineneinheit einströmt. Daher werden Temperaturen von etwa 1200°C bis 1300°C für derartige Gasturbinen angestrebt und auch erreicht.

Bei derartig hohen Temperaturen des Arbeitsmediums sind jedoch die diesem ausgesetzten Komponenten und Bauteile hohen thermischen Belastungen ausgesetzt. Um dennoch bei hoher Zuverlässigkeit eine vergleichsweise lange Lebensdauer der betroffenen Komponenten zu gewährleisten, ist üblicherweise eine Kühlung der betroffenen Komponenten, insbesondere von Lauf- und/oder Leitschaufeln der Turbineneinheit, vorgesehen.

Zur Kühlung weist die jeweilige Komponente dabei üblicherweise einen integrierten Kühlmittelkanal auf, von dem aus ein Kühlmittel gezielt insbesondere den thermisch besonders belasteten Bereichen zuleitbar ist.

Als Kühlmittel kommt dabei in der Art einer offenen Kühlung üblicherweise Kühlluft zum Einsatz. Die als Kühlmittel vorgesehene Kühlluft wird dabei der jeweiligen Komponente über einen integrierten Kühlmittelkanal zugeführt. Von diesem ausgehend durchströmt die Kühlluft in abzweigenden Kanälen die jeweils vorgesehenen Bereiche der Komponente. Diese Kanäle sind austrittsseitig offen gelassen, so daß die Kühlluft nach dem Durchströmen der jeweiligen Komponente aus dieser austritt und sich dabei mit dem in der Turbineneinheit geführten Arbeitsmedium vermischt. Auf diese Weise ist mit vergleichsweise einfachen Mitteln ein zuverlässiges Kühlsystem für die Komponenten der Gasturbine bereitstellbar, wobei auch thermisch besonders belastete Zonen geeignet mit Kühlmittel beaufschlagbar sind.

Allerdings ist bei Verwendung von Kühlluft als Kühlmittel die erreichbare Kühlwirkung nur begrenzt. Dementsprechend ist für eine derartig gekühlte Gasturbine selbst bei Verwendung von Wärmedämmschichten für die thermisch beaufschlagten Komponenten der erreichte Wirkungsgrad begrenzt, zumal ein gesteigerter Bedarf an Kühlluft Verluste im verfügbaren Verdichtermassenstrom bedeuten würde, die ihrerseits nur im begrenzten Ausmaß hingenommen werden können. Es kann daher wünschenswert sein, unter Abkehr von einer kühlluftbasierten Kühlung eine Kühlung unter Verwendung von Kühldampf als Kühlmedium bereitzustellen.

Bei einer derartigen Dampfkühlung kann das aus der jeweiligen Komponente abströmende Kühlmittel jedoch nicht ohne weiteres dem die Turbineneinheit durchströmenden Arbeitsmedium beigemischt werden. Vielmehr ist eine sorgfälltige Trennung des als Kühlmittel verwendeten Kühldampfes vom die Turbineneinheit durchströmenden Arbeitsmedium aus betrieblichen Gründen erforderlich. Daher kann es notwendig sein, einen als Kühlmittelkanal vorgesehenen, dampfführenden Strömungsraum innerhalb der Gasturbine besonders sorgfältig gegen einen luftoder brenngasführenden zweiten Strömungsraum der Gasturbine abzudichten.

Dies gilt insbesondere auch in dem Fall, in dem andere aneinanderstoßende oder in Kontakt stehende Komponenten, beispielsweise Rohrstücke, gemeinsam den Kühlmittelkanal oder dampfführenden Strömungsraum bilden. In diesem Fall ist eine besondere Sorgfalt bei der Abdichtung der üblicherweise einen Spalt bildenden Verbindungsstelle gegen den Außenbereich oder zweiten Strömungsraum erforderlich. Entsprechend hohe Anforderungen an die Abdichtung der jeweiligen Strömungsräume gegeneinander sind dabei beispielsweise für den Fall dampfgekühlter Schutzkacheln zu stellen, die in der Art einer Innenauskleidung die Brennkammer der Gasturbine innenseitig bedekken und somit die Brennkammer vor einer zu hohen thermischen Belastung durch den darin ablaufenden Verbrennungsprozeß schützen. Diese Kacheln können ebenfalls dampfgekühlt sein, wobei ein in die Brennkammerinnenwand integrierter Kühldampfkanal nach außen hin dicht mit einem in die jeweilige Schutzkachel integrierten Kühldampfkanal verbunden ist.

Um eine ausreichend gute Abdichtung zu gewährleisten, ist dabei üblicherweise eine hochpräzise Fertigung der jeweiligen Komponenten mit Spaltmassen von weniger als beispielsweise 1/50 mm vorgesehen. Eine derartig hochpräzise Fertigung ist jedoch sehr aufwendig. Alternativ können die jeweiligen Komponenten, beispielsweise die Kacheln, auch fest angeschweißt sein, wobei sich ohne weiteres eine ausreichende Dichtigkeit erreichen läßt. Dies hat allerdings den Nachteil, daß die jeweiligen Komponenten dann nicht mehr lösbar miteinander verbunden sind, so daß beispielsweise ein verschleißbedingter Austausch oder eine Wartung besonders aufwendig ist.

Der Erfindung liegt daher die Aufgabe zugrunde, ein Dichtungssystem anzugeben, das auch bei einer Verwendung in einer Gasturbine eine lösbare Anbringung von Komponenten bei besonders guter Abdichtung getrennt zu haltender Strömungskanäle mit besonders geringem Herstellungsaufwand ermöglicht.

Diese Aufgabe wird erfindungsgemäß gelöst mit einem ersten Dichtelement, das einen angeformten Dichtkeil aufweist, und mit einem zweiten Dichtelement, bei dem an einem Trägerkörper ein Paar von näherungsweise parallel geführten Dichtlippen unter Spaltbildung angeformt sind, wobei der Dichtkeil mit dem von den Dichtlippen gebildeten Spalt in Eingriff bringbar ist.

Die Erfindung geht dabei von der Überlegung aus, daß gerade bei einer lösbaren Anbringung der Komponenten ein vergleichsweise geringer Herstellungs- oder Fertigungsaufwand erreichbar ist, indem auch vergleichsweise große effektive Spaltmaße der jeweiligen Komponenten noch tolerierbar gehalten werden. Um dies zu ermöglichen, sollte das Dichtungssystem auch bei vergleichsweise großzügig bemessenen Spaltmaßen für die Einhaltung einer besonders hohen Dichtigkeit ausgelegt sein. Eine derartige hohe Dichtigkeit ist erreichbar, indem das Dichtungssystem zur Bildung einer formschlüssigen Verbindung mit den zu verbindenden Komponenten ausgelegt ist. Dies ist auch im vergleichsweise widrigen Umfeld einer Gasturbine erreichbar, indem die bei der Montage der Komponente erfolgende Relativbewegung zueinander geeignet in eine Verformung eines Teils des Dichtungssystems zur Bildung einer formschlüssigen Verbindung umgesetzt wird. Dazu sind das erste Dichtelement im Querschnitt keilförmig und das zweite Dichtelement im Querschnitt annähernd u-förmig ausgebildet, so daß ein Vortrieb des ersten Dichtelements in den vom zweiten Dichtelement gebildeten Spalt dessen Dichtlippen in Querrichtung verformt.

Eine formschlüssige und somit besonders dichtwirkende Verbindung mit den jeweiligen Komponenten ist dabei erreichbar, indem zweckmäßigerweise durch den belasteten Kontakt der beiden Dichtelemente miteinander vornehmlich eine Verformung des zweiten Dichtelements eintritt. Dazu ist die Materialpaarung für das erste und das zweite Dichtelement vorteilhafterweise derart gewählt, daß ein Eindringen des Dichtkeils in den von den Dichtlippen gebildeten Spalt eine Auswölbung der Dichtlippen bewirkt.

Eine besonders einfache Montierbarkeit des Dichtungssystems ist erreichbar, indem die zu verbindenden Komponenten in ihrer Kontur entsprechend an dieses Dichtungssystem angepaßt sind. In besonders vorteilhafter Ausgestaltung sind dabei das erste und das zweite Dichtelement in einem durch zwei Halbnuten gebildeten Kanal angeordnet, der in seiner Breite derart dimensioniert ist, daß sich bei einer entsprechenden Auswölbung der Dichtlippen zu ihrer Außenseite hin jeweils eine formschlüssige Verbindung zur jeweiligen Seitenwand des Kanals einstellt. Dabei ist jede Halbnut jeweils einer der zu verbindenden Komponenten zugeordnet. Bei einer derartigen Ausgestaltung bewirken die gegenüberliegenden Stirnflächen des durch die Halbnuten gebildeten Kanals das Eindringen des Dichtkeils in den von den Dichtlippen gebildeten Spalt. Dabei erfolgt eine Umsetzung der Axialbewegung des Dichtkeils in eine Querbewegung der Dichtlippen, die ein Anpassen der Dichtlippen an die Seitenwände des von den Halbnuten gebildeten Kanals bewirkt.

Um von einem Strömungsmedium beaufschlagte Strömungskanäle besonders wirksam gegeneinander abzudichten, ist das Dichtungssystem vorteilhafterweise ringförmig und umlaufend geschlossen ausgebildet. Dazu sind zweckmäßigerweise das erste Dichtelement zur Bildung eines Spreizrings und das zweite Dichtelement zur Bildung eines Dichtrings jeweils ringförmig ausgebildet.

Das Dichtungssystem eignet sich besonders zum Einsatz in einer Gasturbine, bei der ein dampfführender erster Strömungsraum mit dem Dichtungssystem gegen einen luft- oder brenngasführenden zweiten Strömungsraum abgedichtet ist. Dabei kommt insbesondere ein Einsatz bei dampfgekühlten Kacheln zur Brennkammerauskleidung in Betracht, wobei bei hoher Dichtigkeit eine lösbare Montage der Kacheln an der Brennkammerinnenwand ermöglicht ist.

Die mit der Erfindung erzielten Vorteile bestehen insbesondere darin, daß durch die Kombination eines im Querschnitt im wesentlichen keilförmig ausgebildeten ersten Dichtelements mit einem im Querschnitt näherungsweise u-förmig ausgebildeten zweiten Dichtelement auf besonders einfache Weise eine formschlüssige und somit besonders wirksam dichtende Verbindung zwischen zwei zu verbindenden Komponenten herstellbar ist. Dabei begünstigt insbesondere die durch die Keilform des ersten Dichtelements in Verbindung mit den von den Dichtlippen gebildeten Spalt ermöglichte Umsetzung einer Axialbewegung des ersten Dichtelements in eine Querbewegung der Dichtlippen die Herstellung einer derartigen formschlüssigen Verbindung.

Ein Ausführungsbeispiel der Erfindung wird anhand einer Zeichnung näher erläutert. Darin zeigen:
- Figur 1: Schematisch ein Dichtungssystem im ungespannten (Figur la) und im gespannten (Figur 1b) Zustand,
- Figur 2: ein Dichtungssystem in perspektivischer Ansicht,
- Figur 3: eine Gasturbine im Längsschnitt,
- Figur 4: im Querschnitt eine Kachel zur Brennkammerauskleidung der Gasturbine gemäß Figur 3.

Gleiche Teile sind in allen Figuren mit denselben Bezugszeichen versehen.

Das Dichtungssystem 1 gemäß den Figuren la und 1b umfaßt, wie dies besonders aus der Darstellung im ungespannten Zustand gemäß Figur la erkennbar ist, ein erstes Dichtelement 2 und ein zweites Dichtelement 4. Das erste Dichtelement 2 weist einen angeformten Dichtkeil 6 auf, so daß sich für das Dichtelement 2 ein im wesentlichen keilförmiger Querschnitt ergibt. Das zweite Dichtelement 4 umfaßt hingegen in der Art eines u-förmigen Querschnitts einen Trägerkörper 8, an dem ein Paar von näherungsweise parallel geführten Dichtlippen 10, 12 unter Bildung eines Spalts 14 angeformt sind. Der Dichtkeil 6 des ersten Dichtelements 2 ist dabei mit dem von den Dichtlippen 10, 12 gebildeten Spalt 14 in Eingriff bringbar.

Das Dichtungssystem 1 ist zur Herstellung einer auch hohen Dichtigkeitsanforderungen genügenden dichten Verbindung zwischen einer ersten Komponente 20 und einer zweiten Komponente 22 vorgesehen. Für ein besonders günstiges Zusammenwirken mit dem Dichtungssystem 1 sind die Komponenten 20, 22 dabei in ihrer Kontur an dieses angepaßt. Dazu sind die Komponenten 20, 22 jeweils zur Bildung einer Halbnut geformt. Dazu weist die erste Komponente 20 eine Stirnfläche 24 und eine Seitenfläche 26 der Halbnut auf. Analog weist die zweite Komponente 22 eine Stirnfläche 28 und eine Seitenfläche 30 ihrer Halbnut auf. Beim Zusammenbringen der Komponenten 20, 22 bilden ihre jeweiligen Halbnuten einen Kanal, der seitlich durch die Seitenflächen 26, 30 und ober- bzw. unterseitig durch die Stirnflächen 24, 28 begrenzt ist.

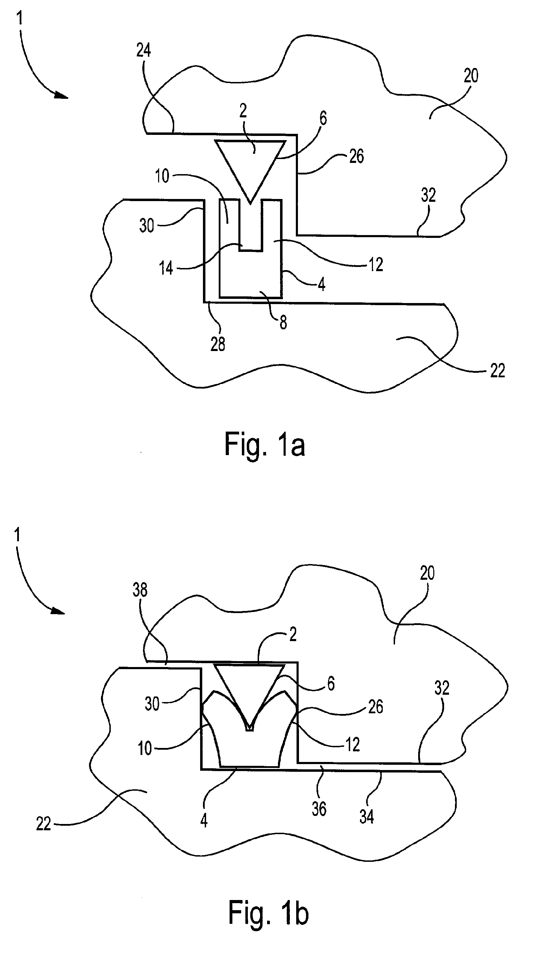

Die Bildung dieses Kanals und die Wirkung des darin angeordneten Dichtungssystems 1 ist insbesondere in Figur 1b erkennbar, die die Komponenten 20, 22 sowie das Dichtungssystem 1 in gespanntem Zustand zeigt. Bei einer Montage oder dem Zusammenbau der Komponenten 20, 22 werden deren Endflächen oder Flanschflächen 32 bzw. 34 in Kontakt miteinander gebracht. Dabei wird über die Stirnfläche 24 der Halbnut der ersten Komponente 20 der Dichtkeil 6 des ersten Dichtelements 2 in axialer Richtung auf das zweite Dichtelement 4 hin verschoben. Dabei dringt der Dichtkeil in den von den Dichtlippen 10, 12 gebildeten Spalt 14 ein, wobei die Dichtlippen 10, 12 in Querrichtung oder nach außen hin verdrängt werden.

Die Dichtelemente 2, 4 sind dabei hinsichtlich ihrer Materialpaarung einerseits und hinsichtlich ihrer geometrischen Abmessungen andererseits derart gewählt, daß ein Einbringen des Dichtkeils 6 in den Spalt 14 eine Auswölbung der Dichtlippen 10, 12 bewirkt. Daran angepaßt sind weiterhin die Abmessungen der den Kanal bildenden Halbnuten der ersten und der zweiten Komponente 20, 22 derart gewählt, daß die Dichtlippen 10, 12 dabei infolge ihrer Verformung an der ihnen jeweils zugeordneten Seitenfläche 30 bzw. 26 zur Anlage kommen. Insbesondere ergibt sich durch das Eindringen des Dichtkeils 6 in den von den Dichtlippen 10, 12 gebildeten Spalt 14 und infolge der daraus resultierenden Querverformung der Dichtlippen 10, 12 eine formschlüssige Verbindung zwischen den Dichtelementen 2, 4 des Dichtungssystems 1 sowie eine formschlüssige Verbindung zwischen den Dichtlippen 10, 12 des zweiten Dichtelements 4 mit der jeweiligen Seitenwand 30 bzw. 26. Somit ist ein mit dem von den Grenzflächen 32, 34 gebildeten Spalt 36 zwischen der ersten Komponente 20 und der zweiten Komponente 22 kommunizierender Strömungsraum dicht von einem mit dem von der ersten Komponente 20 und der zweiten Komponente 22 jenseits des Dichtungssystems 1 gebildeten Spalt 38 kommunizierendem weiteren Strömungsraum getrennt.

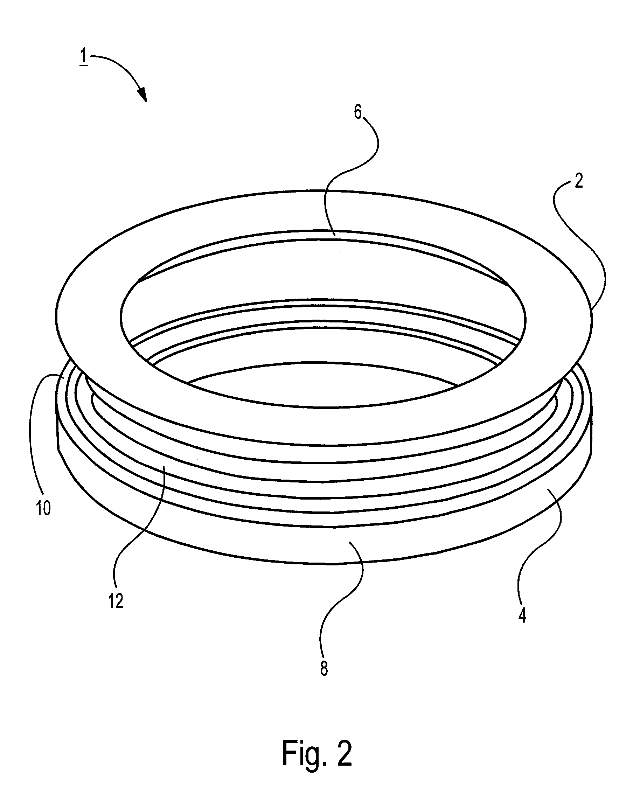

Wie aus Figur 2 deutlich wird, ist das Dichtungssystem 1 als ringförmiges Dichtungssystem ausgebildet. Dabei ist das erste Dichtelement 2 mit seinem angeformten Dichtungskeil 6 ringförmig zur Bildung eines Spreizrings ausgestaltet. Weiterhin ist das zweite Dichtelement 4 gemeinsam mit den an seinem Trägerkörper 8 angeformten Dichtlippen 10, 12 ringförmig zur Bildung eines Dichtrings ausgestaltet. Ein derartig ausgebildetes Dichtungssystem 1 eignet sich besonders zur gasdichten Abtrennung eines von ihm in seinem Zentralbereich umschlossenen Strömungskanals vom umgebenden Außenbereich.

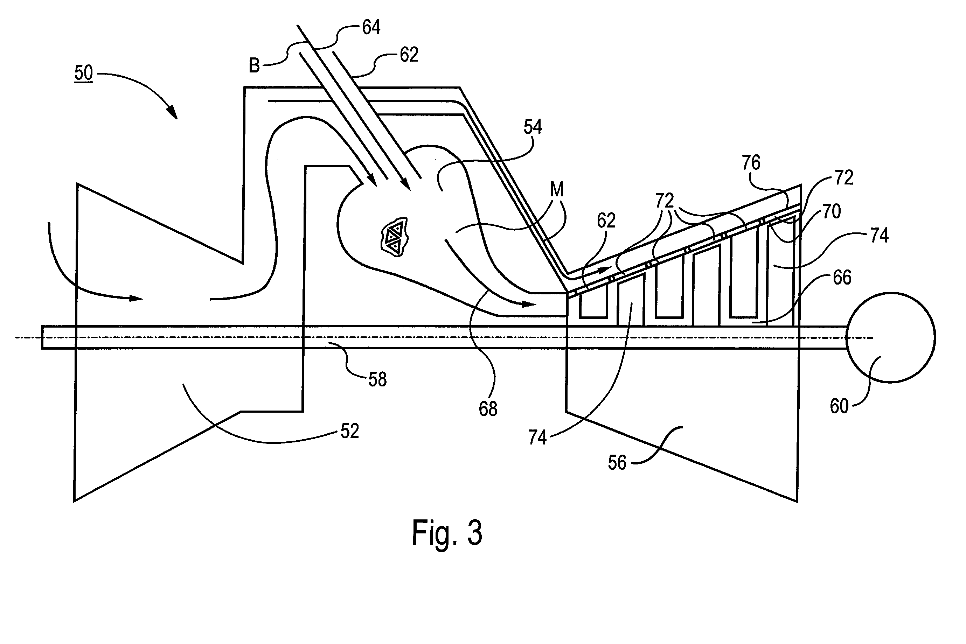

Das Dichtungssystem 1 eignet sich insbesondere zum Einsatz in einer Gasturbine 50 und dort besonders zur dichten Abtrennung eines dampfführenden Strömungskanals von seinem Außenbereich. Eine derartige Gasturbine 50 ist im Längsschnitt in Figur 3 gezeigt.

Die Gasturbine 50 gemäß Figur 3 umfaßt einen Verdichter 52, eine Ringbrennkammer 54 sowie eine Turbineneinheit 56. Der Verdichter 52 und die Turbineneinheit 56 sind dabei auf einem gemeinsamen, auch als Turbinenwelle bezeichneten Rotor 58 angeordnet, der zudem auch noch eine Arbeitsmaschine oder einen Generator 60 antreibt.

In die Ringbrennkammer 54 mündet eine Anzahl von Brennern 62, denen jeweils - wie durch den Pfeil 64 symbolisiert ist - ein fossiler Brennstoff B zuführbar ist.

Die Turbineneinheit 56 bildet einen Strömungskanal 66 für aus der Ringbrennkammer 54 abströmendes, durch den Pfeil 68 symbolisiertes Arbeitsmedium M. Der Strömungskanal 66 in der Turbineneinheit 56 ist dabei durch eine thermisch belastbare Wand 70 begrenzt, die aus einer Anzahl von in Strömungsrichtung des Arbeitsmediums M gesehen hintereinandergeschalteten Wandsegmenten 72 gebildet ist. Ein Teil der Wandsegmente 72 ist dabei durch sogenannte Führungsringe und ein anderer Teil als sogenannte Plattformringe ausgebildet. Die Führungsringe sind dabei am Rotor 58 angeordneten Laufschaufeln 74 gegenüber angeordnet. Die Plattformringe hingegen sind Teil eines mit dem Gehäuse 76 der Turbineneinheit 56 verbundenen Leitschaufelkranzes 78. Die Laufschaufeln 74 dienen dabei zum Antrieb des Rotors 58 über einen Impulsübertrag aus dem die Turbineneinheit 56 durchströmenden Arbeitsmedium M. Die zwischen in Strömungsrichtung des Arbeitsmediums M gesehen aufeinanderfolgenden Laufschaufeln 74 angeordneten, die Leitschaufelkränze 78 bildenden Leitschaufeln dienen hingegen zur Führung des Arbeitsmediums M zwischen zwei aufeinanderfolgenden Laufschaufelreihen.

Aus thermodynamischen Gründen und zur Erzielung eines besonders hohen Wirkungsgrades ist die Gasturbine 50 für eine vergleichsweise hohe Temperatur des aus der Ringbrennkammer 54 abströmenden Arbeitsmediums M von etwa 1200°C bis 1300°C ausgelegt. Um dabei eine besonders hohe betriebliche Zuverlässigkeit zu gewährleisten, ist zusätzlich zur Kühlung von thermisch vergleichsweise stark beanspruchten Komponenten innerhalb der Gasturbine 50 auch die Ringbrennkammer 54 mit einer Innenauskleidung versehen. Die Innenauskleidung besteht dabei aus einer Anzahl von Kacheln 80, die in ihrer Gesamtheit die Innenoberfläche der Ringbrennkammer 54 überdecken.

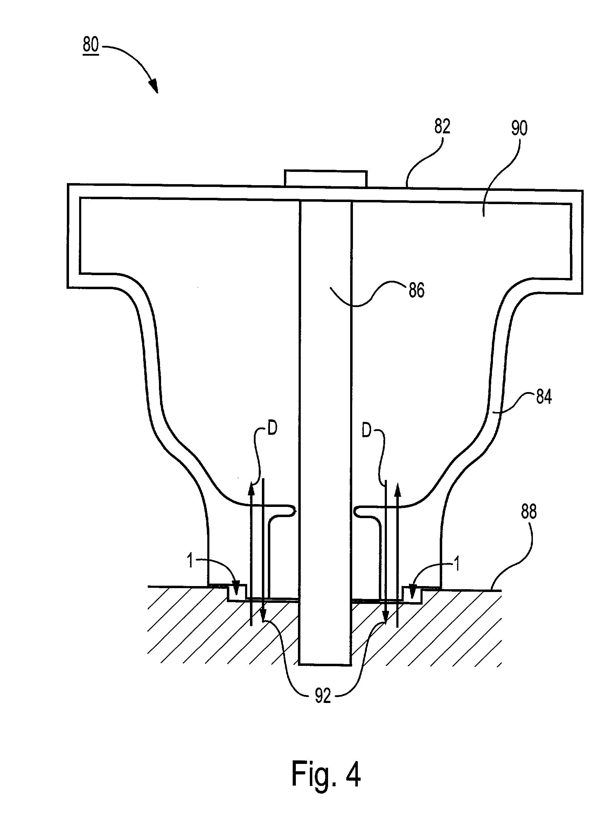

Eine derartige Kachel 80 ist in Figur 4 im Querschnitt dargestellt. Die Kachel 80 umfaßt eine Hitzeschildplatte 82, die aus hitzebeständigem, thermisch hochbelastbarem Material gefertigt ist. Die Hitzeschildplatte 82 ist auf einer Tragstruktur 84 angeordnet und über diese mittels eines zentral geführten Befestigungselements 86 an der eigentlichen Wand 88 der Ringbrennkammer 54 befestigt.

Die Kachel 80 ist wegen der vorgesehenen Beaufschlagung mit der genannten hohen Betriebstemperaturen für das Arbeitsmedium M kühlbar ausgebildet. Dabei ist Dampf als Kühlmedium vorgesehen. Der Kühldampf ist dabei über ein nicht näher dargestelltes Kanalsystem dem von der Hitzeschildplatte 82 und der Trägerstruktur 84 umgebenen Innenraum 90 zu- und aus diesem wieder abführbar, wie dies durch die Pfeile 92 symbolisiert ist. Dabei können im Innenraum 90 noch weitere, im Ausführungsbeispiel nicht näher dargestellte Komponenten zur Strömungsführung des Dampfes D vorgesehen sein.

Gerade bei einer derartigen Dampfkühlung ist darauf zu achten, daß möglichst keine Vermischung des als Kühlmittel vorgesehenen Dampfes D mit dem Arbeitsmedium M der Gasturbine 50 auftreten kann. Um dies sicherzustellen und insbesondere Leckagen des Dampfes D im Bereich der Verbindung der Trägerstruktur 84 mit der eigentlichen Wand 88 der Ringbrennkammer 54 sicher zu vermeiden, sind die durch die Pfeile 92 symbolisierten Strömungskanäle für den Dampf D in einem zentralen Bereich der Kachel 80 geführt, der vollständig durch das Dichtungssystem 1 umschlossen und somit abgedichtet ist. Dazu ist das Dichtungssystem 1, wie in Figur 4 durch die Pfeile angedeutet, um das zentrale Befestigungselement 86 der Kachel 80 umlaufenden Kanal geführt, der durch eine in den Trägerkörper 84 enthaltene und durch eine in die Oberfläche der Wand 88 eingeformte Halbnut begrenzt ist.

Durch die Verwendung des Dichtungssystems 1 ist somit eine lösbare Montage der Kachel 80 an der Wand 88 der Ringbrennkammer 54 ermöglicht, wobei zudem eine besonders hohe Dichtigkeit bei der Abdichtung der Strömungskanäle für den Dampf D gegenüber dem Außenbereich der Kachel 80 gewährleistet ist.

## Patentansprüche

1. Dichtungssystem (1) mit einem ersten Dichtelement (2), das einen angeformten Dichtkeil (6) aufweist, und mit einem zweiten Dichtelement (4), bei dem an einem Trägerkörper (8) ein Paar von näherungsweise parallel geführten Dichtlippen (10, 12) unter Spaltbildung angeformt sind, wobei der Dichtkeil (6) mit dem von den Dichtlippen (10, 12) gebildeten Spalt (14) in Eingriff bringbar ist.

2. Dichtungssystem (1) nach Anspruch 1, bei dem die Material-paarung für das erste und das zweite Dichtelement (2, 4) der-art gewählt ist, daß ein Einbringen des Dichtkeils (6) in den von den Dichtlippen (10, 12) gebildeten Spalt (14) eine Auswölbung der Dichtlippen (10, 12) bewirkt.

3. Dichtungssystem (1) nach Anspruch 1 oder 2, bei dem das erste und das zweite Dichtelement (2, 4) in einem durch zwei Halbnuten gebildeten Kanal angeordnet sind, der in seiner Breite derart dimensioniert ist, daß sich bei einer entsprechenden Auswölbung der Dichtlippen (10, 12) zu ihrer Außenseite hin jeweils eine formschlüssige Verbindung zur jeweiligen Seitenwand des Kanals einstellt.

4. Dichtungssystem (1) nach einem der Ansprüche 1 bis 3, dessen erstes Dichtelement (2) zur Bildung eines Spreizrings und dessen zweites Dichtelements (4) zur Bildung eines Dichtrings jeweils ringförmig ausgebildet sind.

5. Gasturbine (50), bei der ein dampfführender erster Strömungsraum mit einem Dichtungssystem (1) nach einem der Ansprüche 1 bis 4 gegen einen Luft- oder Brenngas führenden zweiten Strömungsraum abgedichtet ist.
